Europäisches Patentamt

European Patent Office

Office européen des brevets

(11) Publication number: **0 267 985 B1**

# EUROPEAN PATENT SPECIFICATION

(45) Date of publication of patent specification: **23.10.91**     (51) Int. Cl.⁵: **C08K 5/10**, C08L 55/02

(21) Application number: **86116028.1**

(22) Date of filing: **19.11.86**

(54) Use of tetrabromobisphenol A dipropionate for the production of flame-resistant, non-migrating and UV-stable ABS molding compositions.

(43) Date of publication of application:
**25.05.88 Bulletin 88/21**

(45) Publication of the grant of the patent:
**23.10.91 Bulletin 91/43**

(84) Designated Contracting States:
**BE DE FR GB NL**

(56) References cited:
**FR-A- 2 067 093**
**FR-A- 2 076 998**

(73) Proprietor: **Chemische Fabrik Kalk GmbH**
**Kalker Hauptstrasse 22 Postfach 91 01 57**
**W-5000 Köln 91(DE)**

(72) Inventor: **Kerscher, Utto, Dr. Dipl.-Chem.**
**Am Beissel 25**
**W-5042 Erftstadt 12(DE)**
Inventor: **Königstein, Otto, Dr. Dipl.-Chem.**
**Alfred-Nobel-Strasse 17**
**W-5000 Köln 90(DE)**
Inventor: **Neukirchen, Ernst**
**Vorsterstrasse 75**
**W-5000 Köln 91(DE)**
Inventor: **Büttgens, Walter**
**Petersbergstrasse 2**
**W-5340 Bad Honnef(DE)**

(74) Representative: **Werner, Hans-Karsten, Dr. et al**
**Deichmannhaus am Hauptbahnhof**
**W-5000 Köln 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

For rendering ABS molding compositions flame-resistant there are mostly used nucleus-brominated aromatic compounds, if desired in combination with antimony trioxide. Brominated diphenyl ethers have proven to be particularly valuable as flame-protecting agents, octabromodiphenyl ether having a melting range of from 190 °C to 220 °C and a mixture comprising hexa-, hepta- and octabromodiphenyl ethers having a melting range of from 110 °C to 140 °C being preferred materials. Polybromophenylene oxide, tetrabromobisphenol A and bis-(tribromophenoxy)ethane have also been known as flame-protecting components for ABS molding compositions.

However, in practice only octabromodiphenyl ether, a mixture comprising hexa-, hepta- and octabromodiphenyl ethers and bis-(tribromophenoxy)ethane (known by the trade name of Firemaster 680) have proven to be useful.

By using the aforementioned products, ABS molding compositions can be rendered flame resistant so that they may meet the specifications of fire test standards, while they do not ony more fulfill the requirements as set with respect to UV stability and migration stability.

When incorporated in the ABS molding compositions, the brominated diphenyl ethers exhibit an inferior UV stability as well as migration with coating formation. Bis-(triphenoxy)ethane shows a UV stability superior to that of the brominated diphenyl ethers, however here the migration is particularly distinct upon the manufacture of larger parts made from ABS by injection molding (mold coating). Thus, there is the object to find a bromine-containing flame-protective agent which, when incorporated in ABS molding composition, will not exhibit the drawbacks as described above.

In the European Patent Application No. 86 103 768.7 to Applicants there has been proposed to use tetrabromobisphenol A dipropionate together with antimony trioxide for the production of flame-protected, UV-stable and migration-stable polybutylene terephthalate molding compositions.

It has now been found that tetrabromobisphenol A dipropionate is also suitable for being used in combination with antimony trioxide for the production of flame-protected, UV-stable and migration-stable ABS molding compositions.

Accordingly, the present invention provides flame-protected, UV-stable and migration-stable ABS molding compositions containing tetrabromobisphenol A dipropionate and antimony trioxide as well as the use of tetrabromobisphenol A dipropionate together with antimony trioxide for the production of flame-protected, UV-stable and migration-stable ABS molding compositions.

The tetrabromobisphenol A dipropionate is used in an amount of 15 to 25% by weight, based on the synthetic material composition, and more particularly from 15 to 20% by weight, in combination with from 4 to 15% by weight, and preferably from 6 to 8% by weight, of antimony trioxide. For stabilizing the tetrabromobisphenol A dipropionate it is advised to add polyepoxide compounds in an amount of from 0.5 to 5% by weight, and preferably from 1.5 to 2.0% by weight, based on the tetrabromobisphenol A dipropionate employed.

As the polyepoxy compound there are products preferred to be used which have been obtained by the reaction of bisphenol A with epichlorohydrin and the epoxide equivalent weight of which is from 180 to 1,000, and preferably from 600 to 850. Due to the combination of tetrabromobisphenol A dipropionate with a small amount of the polyepoxy compound no discolorations of the synthetic molding compositions do occur at the processing temperature of 240 °C. Under a 100 hours' permanent load at a temperature of 80 °C there is not exhibited any migration of the incorporated flame-protecting co mponent. The ABS molded articles outfitted with tetrabromobisphenol A dipropionate meet the requirements of the Underwriters' Laboratories Fire Test UL 94 Class V0.

The mechanical and physical properties of said articles have remained unchanged as compared to the neat ABS. After UV irradiation for 500 hours in a Xenotest apparatus only a slightly more intense yellow coloration of the specimens is determined as compared to those made of neat ABS.

The fire-protecting combination to be used for ABS molding compositions according to the present invention is further illustrated by the following non-limiting examples.

EXAMPLE 1 (Comparison; without flame-protection)

ABS powder is pre-dried at 80 °C and extruded and made into granules at a temperature of 220 °C using a double-screw laboratory extruder. The obtained granules are injection-molded at 230-240 °C in an injection-molding machine to form standard test specimens.

EXAMPLE 2 (according to the present invention)

740 Parts by weight (pbw) of a pre-dried ABS powder, 180 pbw of tetrabromobisphenol A dipropionate, 3.6 pbw of a polyepoxide compound having an epoxide equivalent weight of about 850 and 80 pbw of antimony trioxide are mixed in a fluid mixer. The mixture is extruded on the analogy of Example 1, granulated and injection-molded at 230-240°C to give standard test specimens.

EXAMPLE 3 (Comparison)

790 pbw of a pre-dried ABS powder are mixed in a fluid with 160 pbw of octabromodiphenyl ether (melting range 190°C to 220°C) and 50 pbw of antimony trioxide. The mixture is extruded on the analogy of Example 1, granulated and injection-molded at 230-240°C to give standard test specimens.

EXAMPLE 4 (Comparison)

780 pbw of a pre-dried ABS powder are mixed in a fluid mixer with 170 pbw of a mixture comprising hexa-, hepta- and octabromodiphenyl ether (melting range 110°C to 140°C) and 50 pbw of antimony trioxide. The mixture is extruded on the analogy of Example 1, granulated and injection-molded at 230-240°C to give standard test specimens.

EXAMPLE 5 (Comparison)

770 pbw of a pre-dried ABS powder are mixed in a fluid with 180 pbw of bis-(tribromophenoxy)ethane and 50 pbw of antimony trioxide. The mixture is extruded on the analogy of Example 1, granulated and injection-molded at 230-240°C to give standard test specimens.

The standard test specimens obtained in accordance with the Examples 1 to 5 upon climatization at 23°C/65% r.h. were subjected to the following tests:

1. Fire behavior according to Underwriters' Laboratories UL 94.
2. Impact resistance according to DIN 53453.
3. Tensile strength at break according to DIN 53455.
4. Elongation at break according to DIN 53455.
5. Migration at 80°C/500 hours.
6. UV test / 500 hours Xenotest apparatus.

The test results are set forth in the following Table 1.

TABLE 1

| Test | EXAMPLE | | | | |
|---|---|---|---|---|---|
| | 1 | 2 | 3 | 4 | 5 |
| Fire Test UL 94 2.0 mm Material Thickness | HB | VO | VO | VO | VO |
| Impact Strength DIN 53453 kJ/m$^2$ | No Break | 59 | 54 | 60 | 60 |
| Tensile strength at break DIN 53455 N/mm$^2$ | 33 | 33 | 33 | 34 | 31 |
| Elongation at break DIN 53455 m/m | 0.20 | 0.16 | 0.16 | 0.17 | 0.16 |
| Migration Weight loss % (based on employed fire-protecting agent) | - | 0 | 2.7 | 1.3 | 0.8 |
| Coating upon migration | - | no | yes | yes | yes |
| UV Test Discoloration | light yellow | light yellow | dark brown | dark brown | yellow |

**Claims**

1. Flame-protected, UV-stable and migration-stable ABS molding compositions containing 15 to 25% by weight of tetrabromobisphenol A dipropionate and antimony trioxide.

2. ABS molding compositions according to claim 1, characterized in that they additionally contain polyepoxide compounds.

3. ABS molding compositions according to claims 1 and 2, characterized in that they contain tetrabromobisphenol A dipropionate in amount of 15 to 20% by weight, in addition to from 4 to 15% by weight, and preferably from 6 to 8% by weight, of antimony trioxide, based on the synthetic material composition.

4. ABS molding compositions according to claims 1 to 3, characterized in that they contain, as the polyepoxy compound, a polymeric bisphenol A epoxide having an epoxide equivalent weight from 180 to 1,000, and preferably from 600 to 850.

5. ABS molding compositions according to claims 1 to 4, characterized in that they contain up to 5% by weight of the polyepoxy compound(s).

6. Use of tetrabromobisphenol A dipropionate together with antimony trioxide for the production of flame-protected, UV-stable and migration-stable ABS molding compositions, characterized in that tetrabromobisphenol A dipropionate is used in amount of 15 to 25% by weight.

7. Use of tetrabromobisphenol A dipropionate according to claim 6, characterized in that the substance is used together with polyepoxide compounds.

8. Use of tetrabromobisphenol A dipropionate according to claims 6 and 7, characterized in that tetrabromobisphenol A dipropionate is used in amount of 15 to 20% by weight, in combination with from 4 to 15% by weight, and preferably from 6 to 8% by weight, of antimony trioxide, based on the synthetic material composition.

9. Use of tetrabromobisphenol A dipropionate according to claims 6 to 8, characterized in that as the polyepoxy compound there is used a polymeric bisphenol A epoxide having an epoxide equivalent weight from 180 to 1,000, and preferably from 600 to 850.

10. Use of tetrabromobisphenol A dipropionate according to claims 6 to 9, characterized in that up to 5% by weight of the polyepoxy compound are added to the tetrabromobisphenol A dipropionate.

**Revendications**

1. Compositions de moulage à base d'ABS inifugés, stables aux UV et non migrantes, contenant de 15 à 25 % en poids de dipropionate de tétrabromobisphénol A et de trioxyde d'antimoine.

2. Compositions de moulage à base d'ABS, selon la revendication 1, caractérisées en ce qu'elles contiennent en outre des composés polyépoxy.

3. Compositions de moulage à base d'ABS selon les revendications 1 et 2, caractérisées en ce qu'elles contiennent du dipropionate de tétrabromobisphénol A en une quantité de 15 à 20 % en poids, en plus de 4 à 15 % en poids, et de préférence 6 à 8 % en poids, de trioxyde d'antimoine, par rapport à la composition de matière synthétique.

4. Compositions de moulage à base d'ABS selon les revendications 1 à 3, caractérisées en ce qu'elles contiennent, en tant que composé polyépoxy, un époxyde de bisphénol A polymère ayant un poids équivalent d'époxy allant de 180 à 1 000, et de préférence de 600 à 850.

5. Compositions de moulage à base d'ABS selon les revendications 1 à 4, caractérisées en ce qu'elles contiennent jusqu'à 5 % en poids de composé (s) polyépoxy.

6. Utilisation du dipropionate de tétrabromobisphénol A conjointement à du trioxyde d'antimoine pour la production de compositions de moulage à base d'ABS inifugés, stables aux UV et non migrantes, caractérisé en ce que le dipropionate de tétrabromobisphénol A est utilisé en une quantité de 15 à 25 % en poids.

7. Utilisation de dipropionate de tétrabromobisphénol A selon la revendication 6, caractérisé en ce que la substance est utilisée avec des composés polyépoxy.

8. Utilisation de dipropionate de tétrabromobisphénol A selon les revendications 6 et 7, caractérisée en ce que du dipropionate de tétrabromobisphénol A est utilisé en une quantité de 15 à 20 % en poids, en combinaison avec 4 à 15 % en poids, et de préférence 6 à 8 % en poids, de tyrioxyde d'antimoine, par rapport à la composition de matière synthétique.

9. Utilisation de dipropionate de tétrabromobisphénol A selon les revendications 6 à 8, caractérisée en ce qu' il est utilisé, comme composé polyépoxy, un époxy bisphénol A polymère ayant un poids équivalent d'époxy allant de 180 à 1 000, de préférence de 600 à 850.

10. Utilisation de dipropionate de tétrabromobisphénol A selon les revendications 6 à 9, caractérisée en ce que jusqu'à 5 % en poids de composé polyépoxy sont ajoutés au dipropionate de tétrabromobisphénol A.

**Patentansprüche**

1. Brandgeschützte, UV-stabile und migrationsstabile ABS-Formmassen, enthaltend 15 bis 25 Gew.-% Tetrabrombisphenol-A-dipropionat und Antiomontrioxid.

2. ABS-Formmassen gemäß Anspruch 1, dadurch gekennzeichnet, daß sie zusätzlich Polyepoxid-Verbindungen enthalten.

3. ABS-Formmassen gemäß Anspruch 1 und 2, dadurch gekennzeichnet, daß sie Tetrabrombisphenol-A-dipropionat in Mengen von 15 bis 20 Gew.-%, zusätzlich zu 4 bis 15 Gew.-%, vorzugsweise 6 bis 8 Gew.-% Antimontrioxid, bezogen auf die Kunststoffmasse, enthalten.

4. ABS-Formmassen gemäß einem der Ansprüche 1 bis 3, dadurch gekennzeichnet, daß sie als Polyepoxy-Verbindung ein polymeres Bisphenol-A-Epoxid mit einem Epoxid-Äquivalentgewicht von 180 bis 1000, vorzugsweise 600 bis 850, enthalten.

5. ABS-Formmassen gemäß einem der Ansprüche 1 bis 4, dadurch gekennzeichnet, daß sie bis zu 5 Gew.-% der Polyepoxy-Verbindung(en) enthalten.

6. Verwendung von Tetrabrombisphenol-A-dipropionat zusammen mit Antimontrioxid zur Herstellung von brandgeschützten, UV-stabilen und migrationsstabilen ABS-Formmassen, dadurch gekennzeichnet, daß Tetrabrombisphenol-A-dipropionat in Mengen von 15 bis 25 Gew.-% eingesetzt wird.

7. Verwendung von Tetrabrombisphenol-A-dipropionat nach Anspruch 6, dadurch gekennzeichnet, daß die Substanz zusammen mit Polyepoxid-Verbindungen verwendet wird.

8. Verwendung von Tetrabrombisphenol-A-dipropionat nach Ansprüchen 6 und 7, dadurch gekennzeichnet, daß Tetrabrombisphenol-A-dipropionat in Mengen von 15 bis 20 Gew.-% verwendet wird, zusammen mit 4 bis 15 Gew.-%, vorzugsweise 6 bis 8 Gew.-% Antimontrioxid, bezogen auf die Kunststoffmasse.

9. Verwendung von Tetrabrombisphenol-A-dipropionat nach Ansprüchen 6 bis 8, dadurch gekennzeichnet, daß als Polyepoxy-Verbindung polymeres Bisphenol-A-Epoxid mit einem Epoxid-Äquivalentgewicht von 180 bis 1000, vorzugsweise 600 bis 850, verwendet wird.

10. Verwendung von Tetrabrombisphenol-A-dipropionat nach Ansprüchen 6 bis 9, dadurch gekennzeichnet, daß bis zu 5 Gew.-% der Polyepoxy-Verbindung dem Tetrabrombisphenol-A-dipropionat zugesetzt werden.